# EUROPEAN PATENT SPECIFICATION

(11) **EP 1 872 047 B1**
(45) Date of publication and mention of the grant of the patent: **15.05.2013**
(21) Application number: 06709874.9
(22) Date of filing: 24.02.2006
(51) Int. Cl.: F16L 47/03, B29C 65/02

(54) **MULTI-LAYERED PIPE COUPLING**
KUPPLUNG FÜR EIN MEHRLAGIGES ROHR
JOINT POUR UN TUYAU MULTICOUCHE

(30) Priority: 25.02.2005 WO PCT/GB2005/000682
(43) Date of publication of application: 02.01.2008
(73) Proprietor: Glynwed Pipe Systems Limited, Kent, TN13 1SD (GB)
(72) Inventor: ROBERTS-MOORE, Paul, Clive, Norton Canes, Staffordshire WS11 9XT (GB); BULL, Michael, Walsall Road Norton Canes, Staffordshire WS11 9 NS (GB)
(74) Representative: Townsend, Victoria Jayne
(86) International application number: PCT/GB2006/000642
(87) International publication number: WO 2006/090157

(56) References cited:
- EP-A- 0 493 316
- WO-A-97/27418
- DE-A1- 4 444 914
- GB-A- 2 314 597
- GB-A- 2 318 543
- US-A- 4 039 212
- US-A- 5 352 871
- US-A- 5 375 889
- US-A- 5 786 575
- US-B1- 6 293 311

## Description

This invention relates to the joining of multi-layered pipes.

The use of coaxial multi-layered pipes is well known. Such pipes are commonly used to simultaneously employ desirable properties of two or more materials in a given application. For example, in order to convey a corrosive chemical, a pipe construction material to be in contact with the chemical would need to be resistant to that chemical, however, the chemical-resistant material may not have sufficient mechanical strength to contain the fluid pressure needed to convey the chemical along the pipe. This problem is addressed by introducing a second layer of pipe construction material separated from the chemical by the first, chemical-resistant layer. The second layer need not be resistant to the chemical but is selected to have the mechanical properties needed to contain the chemical as it is conveyed through the pipe line. In the foregoing example, the first (or inner, chemical-resistant) layer may be a polymer and the second (or outer, mechanically reinforcing) layer, a metal, although other combinations of materials are also possible. A pipe may be referred to as a "metal dominant" pipe because the metal layer influences the mechanical properties of the pipe. However, such a pipe is a "metal dominant" plastic pipe.

Often, due to the very different chemical nature of adjacent layers in a multi-layer pipe, the layers of the pipe cannot be bonded together. In such a situation, a third or tie layer is introduced between the first and second layer, the tie layer having chemical properties which enable it to be bonded directly with each of the adjacent layers.

It will be understood that multiple additional layers optionally interspersed with additional tie layers may be included in a multi-layer pipe as previously described.

It will be appreciated that, particularly in hostile environments, there is a high potential for delamination of the multi-layered pipes.

Conventionally, multi-layer pipes of the type previously described are connected by means of mechanical fittings. These mechanical fittings are typically configured to retain the layers of the pipe in compression with each other and so prevent delamination of the pipe. Such fittings may comprise a "push-fit" annulus for receiving the pipe or a crimping mechanism for crimping the pipe ends.

It is known to connect single layer plastic pipes using thermal fusion couplings. The latter include a coiled length of metal which is bedded into the coupling during manufacture. The coupling is then fitted around a pipe and an electrical current is passed through the metal coil. The heat produced by the electrical current causes local melting and fusion of the coupling to the outer surface of the pipe. Electrical current may be passed directly through the coil (this is known as electro-fusion) or may be induced into the coil by means of a second coil positioned around the first, the second coil carrying an alternating electrical current (this is known as fusion by induction heating). It will be appreciated that different coil configurations may be more suited to one of electro-fusion or induction heating than the other.

The use of conventional thermal fusion coupling techniques in multi-layer pipes has been considered but is disadvantageous as these techniques serve only to join couplings to the outer layer of the multi-layered pipes providing no means for preventing delamination of the pipes. Furthermore, these couplings require a relatively complex, multi-stage construction rendering them slow and expensive to manufacture.

Electro-fusion coupling has been used in relation to "plastic dominant" multi-layered pipes. The properties of such a plastic dominant pipe are determined by the plastic layers of the pipe. The plastic dominant multi-layered pipe typically comprises a thick inner layer of plastics material covered by a thin foil of metal which is in turn coated with a thin, outer layer of plastic material. The thinness of the outer layer and inclusion of the metal layer renders it difficult to achieve good fusion between the pipe and the coupling. The problem is addressed by removing the outer plastic and metal foil layer and attaching the coupling directly to the inner, thicker plastic pipe. Although such an arrangement does partially protect the pipe end from delamination by preventing exposure to pipe contents, it is only suitable for plastic dominant composite pipes where the metal layer is close to the outer surface of the pipe. Furthermore, the arrangement does not protect against exposure to the external environment which may be as damaging to the unprotected pipe end as the pipe contents.

A pipe coupling according to the preamble of claim 1 is known from EP-A-0493316.

The present invention aims to provide a pipe coupling which provides for more cost effective, alternative methods for joining multi-layered pipes to be used so as to reduce the incidence of delamination in pipes after coupling.

In accordance with the present invention there is provided a pipe coupling for joining or capping a multi-layered pipe, the coupling having a plastic body and being composed of a spigot portion and one or more shroud portions secured to one or more ends of the spigot portion by securing means provided in cooperating annular surfaces of the shroud portions and spigot portion wherein the securing means comprises an annular protrusion provided on an outer annular surface of the spigot portion and having an annular groove therein into which an annular rim of the shroud portion can be received and characterised in that the annular protrusion is provided with a recess of corresponding proportions to a protrusion provided on the annular rim.

The pipe coupling of the invention can be provided any many forms including but not strictly limited to; a T-junction, an elbow joint, a 45° elbow joint, a cross piece, a Y-piece or an end piece.

Desirably the coupling includes a plurality of fins spaced around an inner annular surface of one or more of the shroud portions.

In a further option, an outer annular surface of the shroud portion of the coupling is provided with a plurality of annularly spaced markers which can be aligned with corresponding markers on pipe work to be joined by the coupling.

In one embodiment the pipe coupling comprises at least in part one or more plastic materials selected from polyethylene raised temperature ("PE-RT") ethylene/octane copolymers, MDPE, HDPE or PP.

In another aspect the invention provides a combination of the coupling of the invention with at least one pipe the coupling and pipe being thermally fused together.

Couplings in accordance with the invention can conveniently be used in a method for joining a multi-layered plastic pipe to a coupling, the multi-layered pipe including at least an outer and an inner layer of thermoplastic material and a core layer of metal or other conductive material which is less than 2mm thick and the pipe having an outside diameter of from 20mm to 110mm, the coupling comprising a unitary piece of thermoplastic material, the method comprising;
providing the coupling including a recess for receiving an end of the multi-layered pipe, the recess being configured, in use, to permit the coupling to contact the inner and outermost layers of the multi-layered pipe received in the recess;
fitting an end of the multi-layered pipe into the recess of the coupling;
introducing heat to both the coupling and either the inner layer alone or both the inner and outer layers of the multi-layered pipe sufficient to cause local melting at the interface between the coupling and either the inner layer alone or both the inner and outermost layers.

It will be appreciated that, by using a coupling which interfaces with both the inner and outermost layers of the pipe, the ends of all layers of the pipe can be sealed within the pipe-coupling join. It is recognised though that for certain sizes and sections of pipe it may only be possible to weld/fuse to the inner pipe layer. This is considered acceptable as the coupling still provides protection of the pipe end from exposure to both the pipes contents and external environment, and the single weld is of sufficient mechanical strength to contain the pipe contents.

Although the pipe comprises a core layer of metal or other conductive material it will be understood that the present invention relates to a plastic composite pipe.

Optionally the inner and/or outermost layers of the pipe comprise ethylene/octane copolymers known as polyethylene of raised temperature performance ("PE-RT"). Such polymers are chosen to operate over a wide range of temperatures from sub-zero to elevated temperatures thus enabling a single system to be adaptable to a number of applications. These polymers do not require any subsequent curing process thus overcoming any cross linking/curing issues associated with cross linked polyethylene and readily lend themselves to thermal jointing techniques. Alternative materials for the innermost and outermost layers include but are not strictly limited to; MDPE, HDPE and PP. The innermost and outermost layers may comprise the same or different materials.

Desirably, the outermost layer has a thickness in the range from 0.5 mm to 1.5mm for pipes with outside diameters of 20mm to 110mm. The inner layer desirably has a thickness of from 0.75 mm to 5.0 mm for pipes with outside diameters of 20mm to 110mm.

It is to be understood that the lower thicknesses in these ranges relate to layers used with pipes of smaller outer diameter and the upper thicknesses in these ranges relate to layers used with pipes of greater outer diameter.

For optimum joining conditions the thickness of the outermost layer is kept to a minimum.

Preferably, the conductive layer of the multi-layered pipe is positioned nearer to the outermost layer than to the inner layer.

The optimum-coupling ratio occurs when the outermost layer is thinner than the inner layer whereby the efficiency of the joining method is improved due to secondary currents induced in the conductive layer from a work coil. The direction of heat flow is directed to the inner pipe layer by a thinner outermost layer because air is a better insulator than the thermoplastic outermost layer. Directing heat towards the inner layer, which is the primary joining layer, reduces power requirements and joining cycle times.

The recess of the coupling is desirably an annular recess defined by an outer and an inner wall (or spigot). The inner wall desirably has a thickness of from 1.5mm to 10.0mm for use with pipes of outside diameters of 20mm to 110mm. Such sections are sufficient to prevent deformation, buckling or collapse during the welding/fusion process as well as providing the required level of pressure resistance should the pipe end not be fully inserted into the annular recess. By providing an innermost wall of the coupling that is of minimum thickness, heat flow from the conductive layer to the primary joining surface of the multi-layered pipe (the outer thermoplastic layer) is increased.

Preferably, the thickness of an outermost wall of the coupling is from 2.0 mm to 5.0 mm for use with pipes of outside diameters of 20mm to 110mm. By providing an outermost wall of the coupling that is of minimum thickness, the coupling allows the work coil to be closer to the conductive layer of the multi-layered pipe such that the coupling ratio is improved.

It is to be understood that the lower thickness in these ranges relates to pipes of smaller outer diameter and the upper thickness in these ranges relates to pipes of greater outer diameter.

The coupling optionally comprises the same material as is used for one or both of the innermost and outermost layers of the pipe, though this is not essential. Whether or not the same material, the material of the coupling is selected to be compatible with the materials of the innermost and outermost layers in the sense that it will fuse with them under appropriate conditions of temperature and pressure.

In one example, the coupling comprises an inner spigot portion and a separately moulded outer shroud portion which is secured to the inner spigot portion. A variety of appropriate means for securing the shroud portion to the spigot portion will no doubt occur to the skilled addressee. For example, an inner, annular rim of the shroud portion may be configured to be received into a groove provided on corresponding outer annular surface of the spigot portion whereby the shroud portion can be clipped into position onto the spigot. In one simple arrangement, a circumferential protrusion is provided around the outer surface of the spigot portion which protrusion includes a central annular groove. The shroud portion is forced over an edge of the circumferential protrusion and clips into the central annular groove. The larger diameter of the protrusion relative to the annular groove prevents easy removal of the shroud when there is axial movement between the shroud and spigot.

Protrusions and recesses may be provided in an axial direction and location between the spigot and shroud portions achieved by rotation of the shroud with respect to the spigot. For example, an inner annular rim of the shroud portion may be provided with a protrusion which extends radially inwardly of the shroud portion. A correspondingly shaped recess may be provided in a radial direction of the circumferential protrusion of the spigot portion to receive the protrusion of the shroud portion. Once the protrusion is received in the recess, the shroud portion can be rotated relative to the spigot portion and the protrusion located in the circumferential groove.

A locating groove and recess arrangement for clipping together the shroud and spigot portions may include a locator whereby the shroud and spigot are fixed in a given rotational position, the rotational position being defined with reference to one or more alignment marks on the outer surface of the coupling.

On an inner annular surface of the shroud portion and/or on an outer annular surface of the spigot portion, there are desirably provided a plurality of axially extending fins. The fins are preferably equally spaced around the circumference of the annular surface. The fins enable more accurate centring of a pipe end received in the coupling.

Various methods may be used to introduce heat to both the coupling and the inner and outer layers of the multi-layered pipe. In one alternative, heat is introduced by electromagnetic induction. The coupling with the pipe end received in the recess is surrounded by an electrically conducting coil. An alternating electrical current is passed through the coil. The passage of the current through the coil induces a current in the conducting layer of the pipe. This current causes local heating sufficient to melt the surrounding thermoplastic layers of the pipe and the thermoplastic of the coupling, thus the pipe and coupling become thermally bonded.

Preferably the thickness of the conductive layer is from 0.2 mm to 1.2 mm, wherein a thinner conductive layer is used with a pipe of smaller outer diameter and a thicker conductive layer is used with a pipe of greater outer diameter.

It is advantageous for the inner thermoplastic layer to reach a higher temperature than the outer thermoplastic layer as quickly as possible. When the conductive layer is a poor conductor of heat a conductive layer of reduced thickness increases the heating efficiency of the method. Also, a thin conductive layer is easier to form from a sheet into a pipe.

Preferably, the combined thickness of the outer and inner thermoplastic layers is greater than the thickness of the core conductive layer.

Optionally, where this method is to be used, the core layer of the pipe comprises aluminium.

Preferably, the core layer comprises a ferromagnetic material such as magnetic stainless steel. The magnetic stainless steel layer is not limited to any specific type or grade of stainless steel but can comprise martenistic stainless steel, ferritic stainless steel, Duplex or Super Duplex stainless steel.

Magnetic stainless steel is advantageous in that the induction heating of such materials is more efficient than for most non-ferromagnetic materials, thus less power is required to cause local melting of the pipe and coupling. Typically, the electrical load in a work coil required to cause local melting of a pipe and coupling when the core layer of the pipe comprises aluminium is 500A. Typically, when the core layer comprises stainless steel the electrical load is reduced to 100A. The improved efficiency reduces energy requirements because higher conductive layer temperatures are reached more quickly with an associated reduction in power requirements and weld cycles.

The reduced power requirements for a pipe comprising a stainless steel core layer allow for the use of a smaller, lighter and less expensive induction power supply. Alternatively, a similar rated power supply unit is capable of performing multiple, simultaneous joinings or joining pipes of greater outside diameter. The current required in the work coil is consequently reduced and design options for the work coil are increased. For example, permitting more portable and lower cost induction welding units to be used. Fewer electrical contacts would be required within a specifically designed work coil to cope with a reduced work coil current, which is advantageous when locating contacts in the limited work space of a coil and housing.

Preferably, where the conductive layer comprises stainless steel the thickness of the conductive layer is from 0.2 mm to 0.8 mm.

Using known solid state induction techniques, the heating parameters for the method such as, cycle time, current frequency and power input can be accurately controlled allowing a high degree of repeatability contributing to consistency of joint integrity and a reduction in rejects.

Where the core layer comprises aluminium or magnetic stainless steel, using a pre-programmable variable power input, the aluminium or magnetic stainless steel interface temperature is desirably maintained at between about 200 °C and 260°C. The amount of energy needed to achieve the temperatures can be determined from the power applied to the electrically conducting coil, the surface area of aluminium or magnetic stainless steel, in the core layer to be heated, and the weld cycle time.

The weld cycle time is desirably in the region 10s to 300s depending upon pipe diameter, around 10s for the smallest diameters and 300s for largest.

Where the core layer comprises aluminium or magnetic stainless steel, the operating frequency of the electrically conducting (work) coil is desirably between about 40kHz and 120kHz again depending on pipe diameter. It will be appreciated that the optimal operating frequency used will differ for different metallic materials. The frequency chosen reflects the inherent characteristics of the materials structure and is influenced by the materials inherent conductivity and resistivity and whether or not the material is magnetic. Determination of an appropriate frequency for a pipe and coupling of given structure is assumed to be well within the capabilities of the skilled reader.

The work coil is supplied with an alternating current and corresponding voltage by induction welding equipment. The induction welding equipment typically comprises of an induction power supply unit, connected to a remote output circuit by an inter-connecting power lead. The work coil connects directly to the remote output circuit. The alternating current in the work coil induces a magnetic field that surrounds the work coil and any object, in this case the metal layer within the pipe, which is located within the work coil. The magnetic field sets up secondary eddy currents in the metal layer of the pipe which; through resistive effects, cause the metal to heat.

The power supply unit is desirably dual input with means for automatic recognition of both 110v and 230v supplies. This feature allows the unit to be used both in the UK and overseas. A generator can be used with the power supply.

The induction welding equipment is desirably of a design which is portable and lightweight. In one embodiment, this is achieved by designing the internal electronic circuitry to operate from a 110V AC power input such that the need for any internal voltage transformer as used in conventional induction welding equipment is removed. (It will be appreciated that the transformer is the heaviest item within a conventional induction welding power supply unit.) The supply voltage is transformed using industry standard portable transformers, for example of the type commonly used in the construction industry. The resistive characteristics of the internal electronic components of the induction power supply unit are selected to minimize the heat generated by the components and the consequent amount of cooling required. Whilst, in conventional systems, water cooling of the induction power supply unit is necessary to remove the excess heat, in the present embodiment, cooling is achieved through strategic, direct assembly of the internal electronic circuitry onto a lightweight aluminium finned heat sink which also forms an integral part of the superstructure of the induction welding power supply unit. As a result of the novel design described, the weight of the induction welding power supply unit is typically no greater than 15kg compared to from 35 to 50kg for conventional equipment having the same maximum power rating. The inter-connecting power leads of the novel equipment enable an operator to perform a number of welds at a distance from the induction welding power supply unit. This significantly reduces the effort required by the operator in carrying equipment throughout an installation and increases mobility. The length of the inter-connecting power lead is typically 3-5m. It is necessary to compensate for the power losses along the interconnecting power lead with the use of a specially designed remote output circuit box. This is air-cooled and typically weighs 1-3kg and is considerably smaller than the induction welding power supply unit.

Conveniently, the electrically conducting coil can be provided in the form of a flexible wire which can be coiled around the pipe in an appropriate configuration to provide the desired heating effect. The efficiency of the heating process may be enhanced through the use of a special construction of wire, commonly referred to as litz wire. The wire is constructed from a number of individually insulated copper wires that are twisted or braided together. The construction of the wire reduces eddy current losses and skin effect problems to the extent that efficiencies are increased. A more efficient work coil allows for shorter joining cycle times and reduces power requirements. The litz wire is also advantageous because heat build up is minimised. This enables the work coil to operate without water cooling which is a normal requirement for standard copper work coils. The fact that the coil is capable of maintaining a safe working temperature, without the use of an artificial cooling media, is advantageous because an installer does not require the use of a water supply which can be difficult to source on a new build installation. It will be appreciated that the optimum configuration for the coil can be determined from the coupling ratio of the coil to the pipe (i.e. the inner diameter of the coil and the outer diameter of the metal layer of the work piece) from the parameters of the electrical supply to be provided to the coil and the heating characteristics of the core metal layer.

Preferably, the work coil has between 3 and 6 full turns.

The number of turns of the work coil is selected according to the frequency of the power output and the outer diameter of the pipe or fitting that is to be joined.

Preferably, an inter-changeable Remote Output Circuit (ROC) is used to connect the work coil to the power supply units.

An ROC allows for correction of the work coil to optimise its efficiency.

Optionally, a kit may be provided comprising a plurality of coils suitable for use with a variety of pipe sizes and constructions and a single remote output circuit box which is desirably hardwired into the power supply circuit. A connector is provided which allows interchange of coils of different specifications for use with the single remote output circuit.

Accurate positioning of the flexible coil may be achieved by providing a two part cylinder which is sized to clamp around the pipe and fitting. The two parts of the cylinder may be hingedly connected or may be fastenable together by any conventional, mechanical means. One or more guides may be provided in or on the outer surface of the cylinder to receive the wire and hold it in an appropriate configuration. For example, a guide may be provided in the form of a helical groove machined into the outer surface of the cylinder at an appropriate depth and with an appropriate pitch for receiving the flexible wire. Whilst a helical configuration is convenient, it will be appreciated it is not essential. Once the wire is held in place in the guide or guides, it is desirably clamped in place by a restraining device, optionally in the form of a second cylindrical clamp.

Other suitable restraining devices include but are not strictly limited to a strap or a clip.

Preferably, the coil contains electrical contacts to connect the work coil which in combination are able to carry the electrical current load of the work coil.

The cylinder comprises a material which has a relatively low heat conductivity, which is not inductive and which is not compatible (i.e. it will not fuse) with the materials of the coupling and pipe under the conditions applied for fusing the coupling to the pipe. For example, the material of the cylinder may have a melting point which is significantly higher than that of the coupling/pipe. Optionally, the cylinder may be coated with a material which is incompatible with those of the coupling/pipe, its body comprising a different material. The incompatible material of the cylinder or its coating may, optionally, comprise a crystalline engineering thermoplastic material for example nylon or acetal.

It will be appreciated that the flexible wire when combined with a variety of differently sized, helically grooved cylindrical clamps, is adaptable for use with pipes in a wide range of diameters (e.g. from 20-110mm).

As an alternative to the flexible coil, a cylinder clamp similar to that already described may be provided with an integral coil. This does not necessarily need to be a helical coil - other configurations may be used. The coil is moulded or bonded into position in the cylinder which is designed in such a manner that it may be placed around the pipe/fitting joint, for example it may consist of two half shells which may be connected via a hinge or other similar device, which allows continuation of the coil wire from one half shell to another. When the cylinder is reformed (i.e the two parts are closed or fastened together), the corresponding pieces of coil are matched up thereby reforming the coil. Optionally, in this arrangement, the ends of the coil may be terminated in a specific manner so as to ensure intimate contact of the ends of the coil when it is reformed.

In another option, coil portions are laid in grooves in a cylinder clamp and ends of the coil portions are welded to one or more contact pairs on either side of the hinge. When the contact pairs are closed (by closing the clamp) a work coil is formed. The appropriate number of contact pairs is of course dictated by the coil size and characteristics of the pipe to be coupled. By way of example, it is anticipated that between 3 and 10 contact pairs would be suitable for use with pipes in the diameter range 20-110mm when the pipe contains a stainless steel metal layer and up to 40 contact pairs where the same diameter pipes have an aluminium metal layer.

Cylinder clamps in accordance with the invention are preferably of a broadly symmetrical design enabling them to be easily used in a left handed or right handed manner.

Heat generation by mutual induction is time and energy efficient, thus joining costs and process times can be minimised. The process is clean and non polluting producing no harmful emissions, noise or waste heat which may significantly affect the surrounding environment and as such is safe and not unpleasant for installers to use.

It will be appreciated that other means could be used to create heat in a metallic or other conductive layer which could, in turn, conduct heat to surrounding thermoplastic layers and a coupling. For example, current may be applied directly to the metal or conductive layer. The metal layer may also be employed to conduct heat from another heat source and to the thermoplastic layers and coupling. Other heating means and methods will no doubt occur to the skilled addressee without departing from the scope of the invention as defined by the appended claims.

In another alternative suitable for use in pipes with or without a metallic/conductive middle layer, the coupling and inner and outermost layers of the pipe may be heated using socket fusion. Using heating tools shaped to complement the cross section of the coupling and the pipe end, the tools are placed into the recess of the coupling and over the ends of the pipe extending some way along the exposed surfaces of the inner and outermost pipe layers.

Heat is applied to the tools which in turn heat by conduction, the section of the coupling defining the recess, and the exposed surfaces of the pipe. Heat may be applied to the heating tools when in situ or prior to application to the coupling and pipe end. Once local melting of the coupling and pipe begins to occur, the heating tools are removed and the pipe end is inserted into the recess of the coupling. In this alternative, the recess of the coupling is desirably sized to close tolerances to ensure an interference fit of the pipe end in the recess. This ensures a joint pressure sufficient to bond the pipe end with the coupling when inserted.

Any known method can be used to heat the heating tools, for example (but not strictly limited to); resistance heating, heating by conduction and heating by induction.

Heating parameters for heating the tools such as heat soak time and temperature can be accurately controlled allowing a high degree of repeatability of the method contributing to consistency of joint integrity and a reduction in joint rejection.

This process is a clean and non polluting producing no harmful emissions, noise or waste heat which may significantly affect the surrounding environment and as such is safe and not unpleasant for installers to use.

Pipes of multi-layer construction can be joined using fittings of the design as previously described and any method which creates sufficient heat to melt exposed thermoplastic surfaces of the pipes and fittings which, when placed in contact with each other fuse to form a joint which encloses and protects the pipe end. Such methods already known in field of pipe joining include (but are not strictly limited to) ultrasonic and spin welding.

The method provides a homogenous weld about the pipe end enclosing the ends of each of the layers of the pipe and which is less susceptive to thermal effects such as shrinkage or expansion often encountered in the use of mechanical fittings and which can ultimately result in leakage of materials carried in the pipe. As the bore of the pipe is included in the seal and the pipe end face isolated from internal fluid pressures of fluids conveyed through the pipe, the incidence of pipe end delamination is, consequently, eliminated. Enclosing of the pipe ends and in particular, the end of the metal layer also serves to prevent contamination of the contents of the pipe which might occur were the metal layer exposed to contents and to corrode and breakaway or dissolve in solution in the pipe contents.

Optionally, the cross-section of the coupling defining the recess may be U-shaped, J-shaped or L-shaped.

The flow of heat when using a J-shape or L-shaped coupling is improved because the material from which the coupling is made has greater thermal conductivity than air. The shape of the coupling allows more heat to flow to the multi-layered pipe within the coupling.

The coupling configurations ensure that the bore of the pipe is always included in the seal and assists in the elimination of pipe end delamination. It is to be understood that the term coupling as stated herein is intended to include pipe end fittings for closing the ends of pipes as well as fittings for joining pipes together. The method has application in joining of pipes to couplings of all types including but not strictly limited to; T-junctions, elbows, 45° elbows, cross pieces and Y-pieces. The couplings are conveniently provided with annular recesses in their open ends configured to receive the ends of pipes to be joined.

The resulting joint is considerably more leak proof than joints provided by mechanical methods such as mechanical crimping.

To assist the reader in understanding the invention, there follows a description of some embodiments of pipes and couplings to which the invention may be applied and of apparatus which may be used to perform the invention.

The following Figures are referred to in the discussion which follows:
Figure 1 illustrates an axial cross section through a multi-layered pipe to which the present invention may usefully be applied;
Figure 2 illustrates the principle of mutual induction as it occurs in a metallic tube surrounded by an induction coil having a current passed through it.
Figure 3 illustrates a pipe and coupling of the invention being joined in accordance with methods described herein.
Figure 4 illustrates a variety of configurations of pipe coupling in accordance with the invention.
Figure 5 illustrates schematically a first coil and clamp arrangement which may be used in coupling embodiments of the invention to multilayer pipes where heat is generated through electromagnetic induction of the core layer.
Figure 6 illustrates schematically a second coil and clamp arrangement which may be used in coupling embodiments of the invention to multilayer pipes where heat is generated through electromagnetic induction of the core layer.
Figure 7 illustrates an induction welding system suitable for use in heating the core metal layer of the pipe of Figures 1 and 2.
Figure 8 illustrates a set of heating tools suitable for use in implementing an embodiment of the methods described herein.
Figure 9 illustrates a first view of an alternative embodiment of pipe coupling in accordance with the invention, the coupling shown is a straight coupling.
Figure 10 illustrates a second view of the embodiment of Figure 9.
Figure 11 illustrates a first view of a second alternative embodiment of pipe coupling in accordance with the invention, the coupling shown is a right angled coupling.
Figure 12 illustrates a second view of the embodiment of Figure 11.

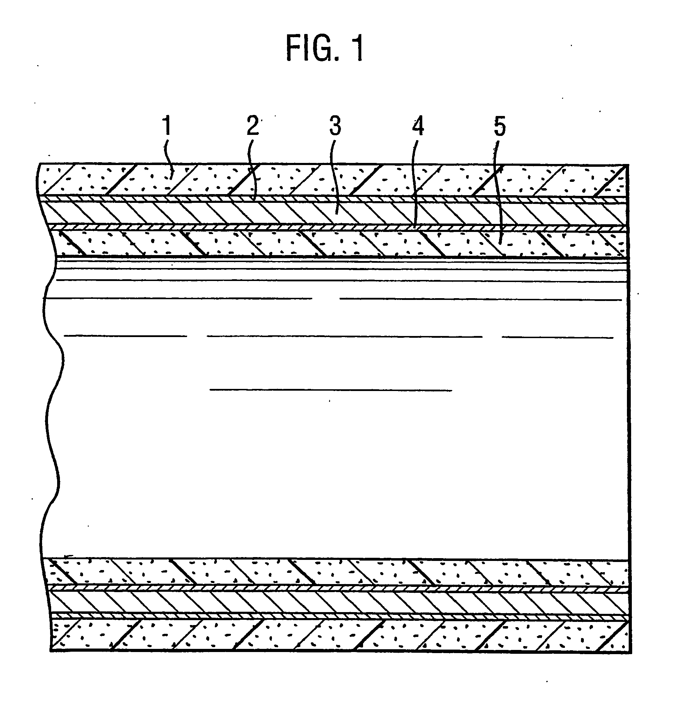

As can be seen from Figure 1, a multi-layered pipe to which the method may be applied comprises five coaxial layers; an outermost polymer layer 1, core metallic layer 3, and an innermost polymer layer 5; an outer tie layer 2 located between the outermost polymer layer 1 and the core metallic layer 3 and an inner tie layer 4 located between the core metallic layer 3 and the innermost polymer layer 5. The metallic layer 3 is shown to be positioned centrally within the multi-layered pipe but it is to be understood that the outermost polymer layer 1 may be thinner than the inner polymer layer 5 such that the conductive layer is positioned nearer to the outermost polymer layer 5.

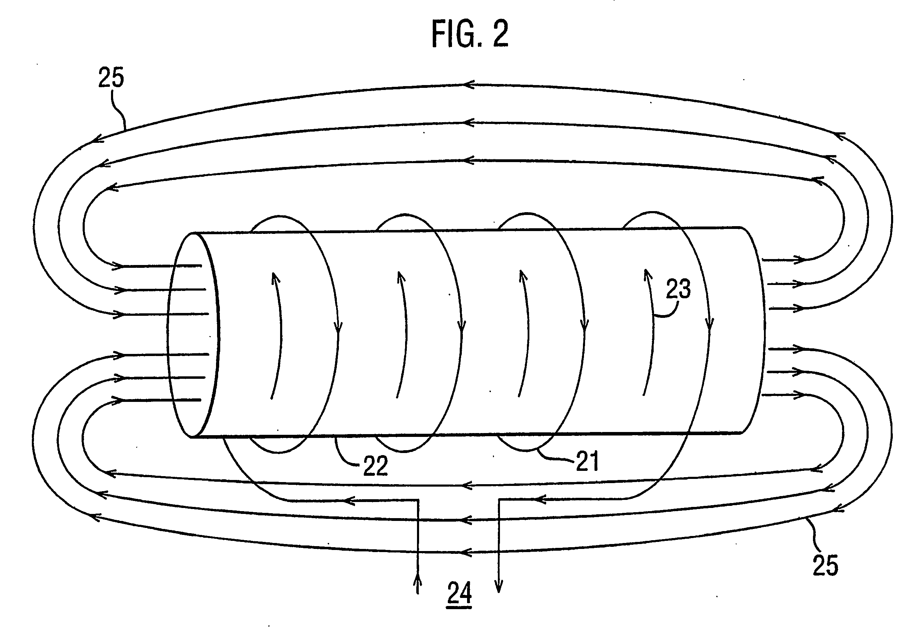

Figure 2 illustrates a primary induction coil 21 encircling a tubular metal core 22. A current is induced into the primary coil by a supply 24. A magnetic B-field 25 results from the current in the primary coil 21 which in turn induces in the tubular metal core a secondary current 23. It will be appreciated that due to resistance in the metal material of the tubular core 22, a heating effect will result from the secondary current 23.

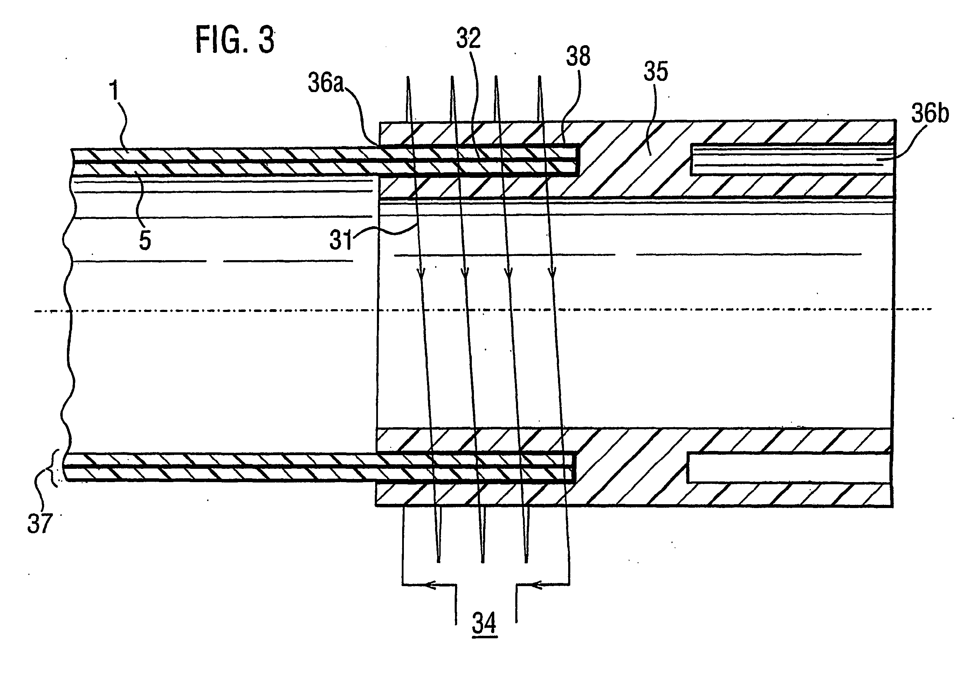

In the left hand side of Figure 3 there can be seen a multi-layered pipe of similar construction to that shown in Figure 1. To the centre and right of the Figure is shown a coupling 35 which essentially comprises a hollow tubular moulding of thermoplastic material having an annular slot 36a, 36b provided in each end. The multi-layered pipe 37 is slotted into the annular slot 36a. The assembled pipe and coupling are positioned inside a primary induction coil 31 provided with an alternating current by current supply 34. As a consequence of the current 34 in the primary coil 31, there is induced in a portion 32 of the core metallic layer 3 of the multi-layered pipe 37 a secondary current. The secondary current in turn produces local heating which leads to a region 38 of local melting of the coupling 35 and the innermost and outermost thermoplastic layers 1, 5 of the multi-layered pipe 37. The molten layers bond and on removal of the assembly from the primary coil, there is provided a fully bonded pipe-coupling join. The process can be repeated with a second pipe in the second annular slot 36b to provide a securely joined pipe.

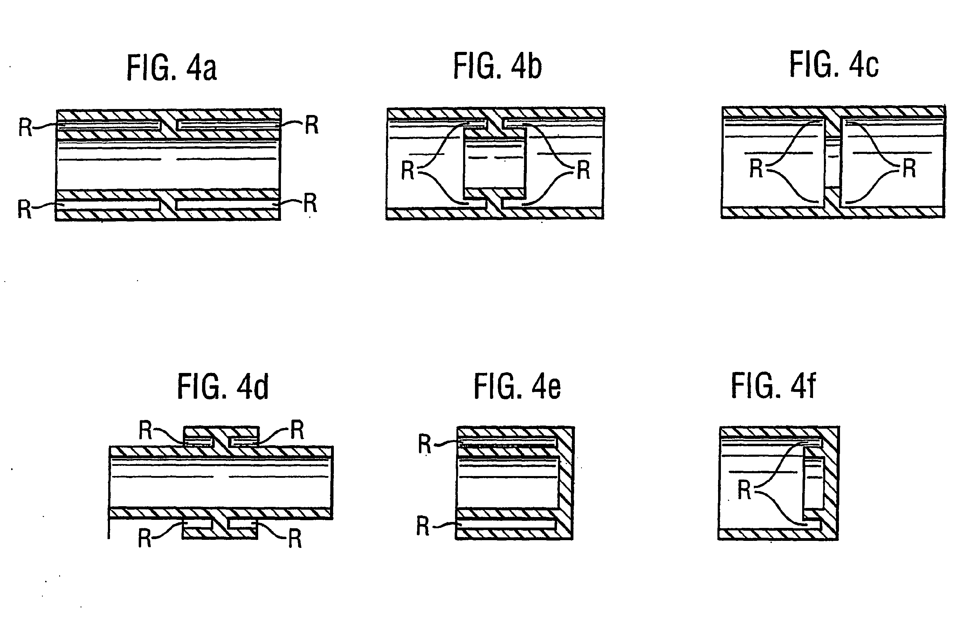

Figure 4 shows in longitudinal section a variety of pipe couplings in accordance with the invention. The couplings generally comprise a single unitary piece of hollow circular cross section. Figure 4a shows a two ended pipe coupling for joining a pair of pipes in parallel. In cross section, the shape of the coupling can be seen to comprise four "U"s arranged in two pairs, end to end. Each U shaped section defines part of an annular recess R for receiving an end of a pipe. The coupling of Figure 4b is broadly similar to that of Figure 4a but differs in that rather than U-shaped, the four sections are "J" shaped, thus the part of the coupling which sits adjacent the exposed surface of the innermost layer of an inserted pipe is shorter in length than that which sits adjacent the exposed surface of the outermost pipe. Figure 4c shows a further variation wherein the sections are essentially "L" shaped. The short end of the L is of sufficient length to extend across the end surfaces of each layer of the pipe but does not extend into the bore of the pipe when the pipe is inserted.

Figure 4d illustrates an arrangement similar to that of Figure 4b, however, in this embodiment, the longer part of the J sits adjacent the exposed surface of the innermost layer of the pipe when the pipe is inserted. Figures 4e and 4f illustrate pipe end caps corresponding to the couplings of Figure 4a and Figure 4b. It will be appreciated that the couplings may take other forms, for example, elbow joints, T-joints and Y-joints. Couplings of the invention are characterised by their unitary nature and the provision of a recess which accommodates the ends of both the inner and outermost layers of a multi-layered pipe.

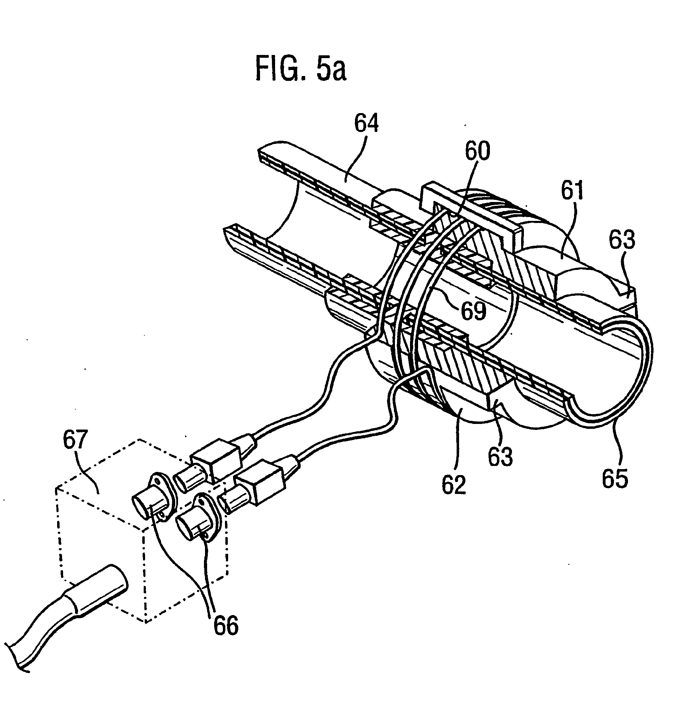

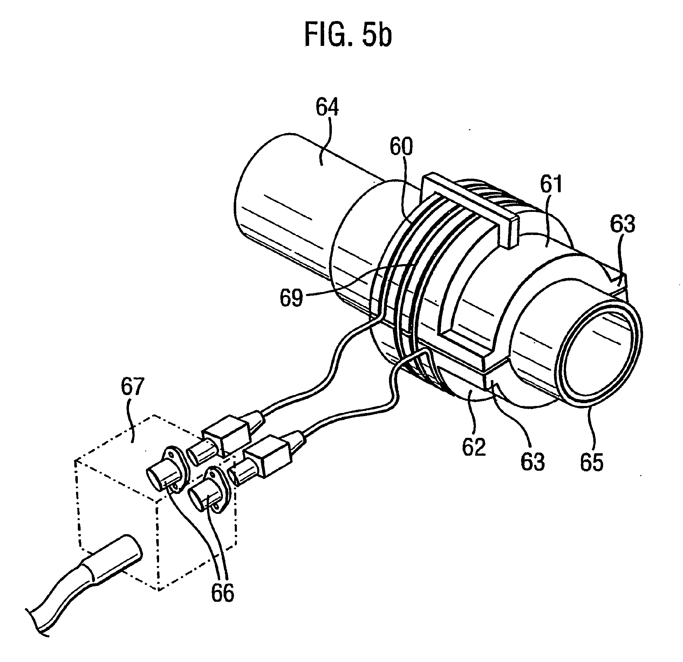

As can be seen in Figure 5 there is provided a substantially cylindrical clamp comprising an upper 61 and a lower 62 part each having a lipped portion 63 extending radially outwardly and longitudinally of the cylinder parts 61, 62. Two opposing lipped portions 63 of the respective cylinder parts 61, 62 may, optionally, be hinged together. As an alternative to hinging, the respective lip portions may be joined together by mechanical means, for example by bolts or clips (not shown).

The two parts are joined so as to enclose two pipe ends 64, 65 which in turn are connected by a thermoplastic coupling (not shown). With the two parts 61, 62 joined together, a flexible wire 69 is coiled around the outer surface of the closed clamp and is received in a helical groove 60 provided in the outer surface of the clamp.

The ends of the wire 69 are provided with terminals 66 which, in turn, can be plugged into sockets of a remote output circuit 67.

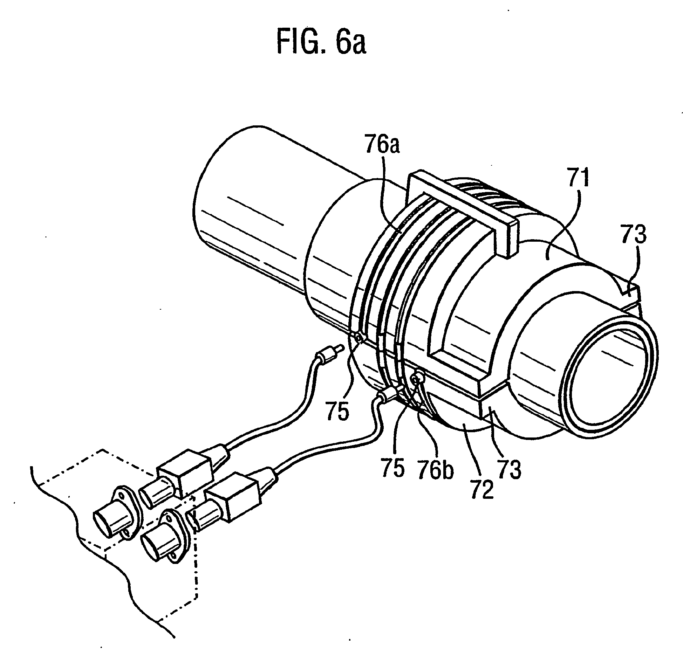

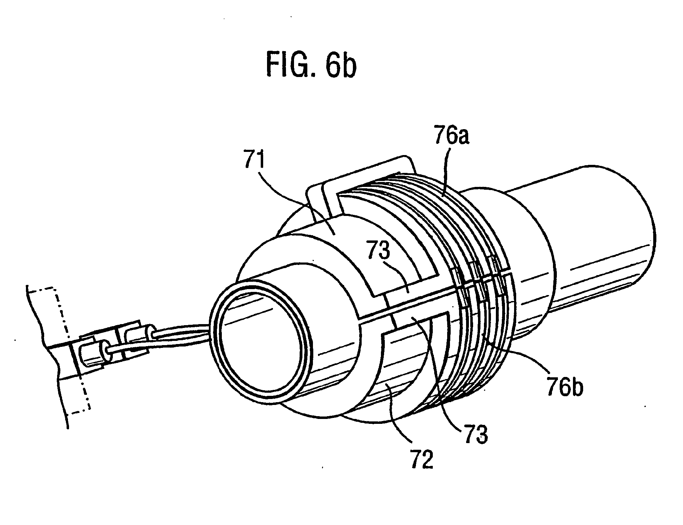

In Figure 6 two cylinder parts 71, 72 are again provided, each with a lipped portion 73 extending radially outwardly and longitudinally of the cylinder. The arrangement differs from that of Figure 6 in that each cylinder part 71, 72 has integrally formed therein half of a coil 76a, 76b. When the two parts are properly aligned, the two half coils engage together to form an induction (work) coil. The work coil is provided with two end terminals 75 which can be connected to a remote output circuit 67 using similar end terminals 66 as shown in Figure 5.

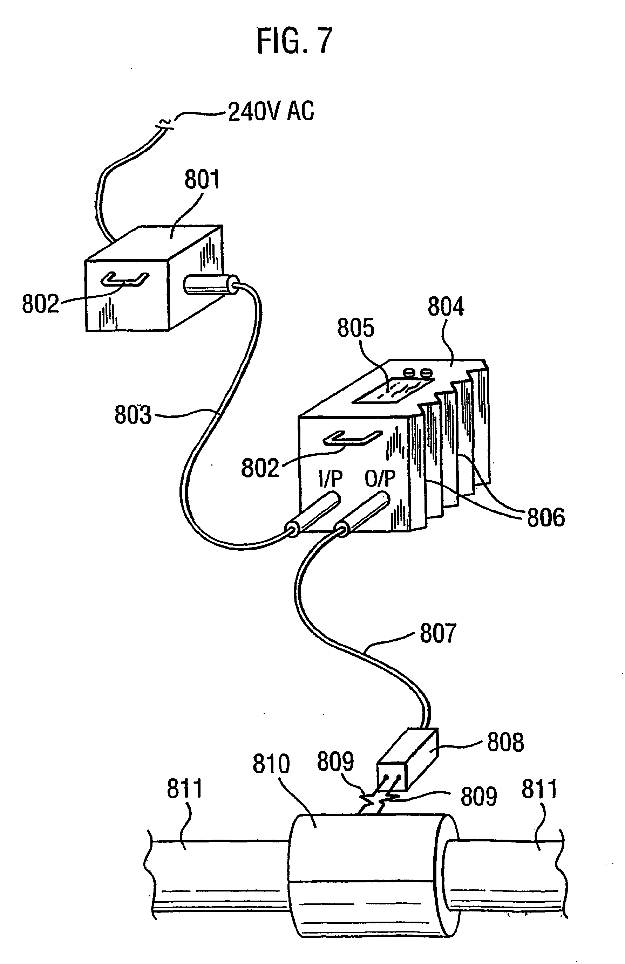

Figure 7 shows schematically an embodiment of induction welding equipment specifically designed for use in the field. As can be seen, the induction welding equipment, in use, is connected to a standard 240/110V transformer 801 which receives an input from a 240V AC power supply.

The transformer 801 is embodied in a box having a total approximate weight of around 12kg. The box is provided with one or more handles 802 for easy carriage by an operator.

A cable 803 capable of delivering 110V is provided between the transformer 801 and a portable power induction power supply unit 804. The 110V AC power supply is received as an input to the induction power supply unit 804 via cable 803. The induction power supply unit 804 is embodied in a lightweight box and has an approximate total weight of 15kg. On a top surface of the box is an operator interface panel 805 by means of which an operator can select the appropriate welding conditions, that have been predetermined to affect the optimum power output and cycle time from the induction power supply unit to the work coil that surrounds the pipe and fitting to be welded. One or more sides of the supply unit 804 comprise a number of conductive fins 806 (for example, aluminium) which act as a heat sink dispersing heat generated internally of the induction power supply unit. The induction power supply unit 804 is also provided with one or more carrying handles 802.

Once the desired characteristics of the output supply voltage have been selected by the operator, the output supply voltage directed to the work coil via an interconnecting lead 807 from the induction power supply unit 804 to a remote output circuit box 808 (approximate weight 1-3kg). The interconnecting lead 807 is designedly long (for example about 3-5 meters). The remote output circuit box 808 includes circuitry to compensate for losses or distortions on the characteristics of the selected output supply voltage incurred in transmission through the interconnecting lead 807. The approximate weight of the remote output circuit is 1-3kg.

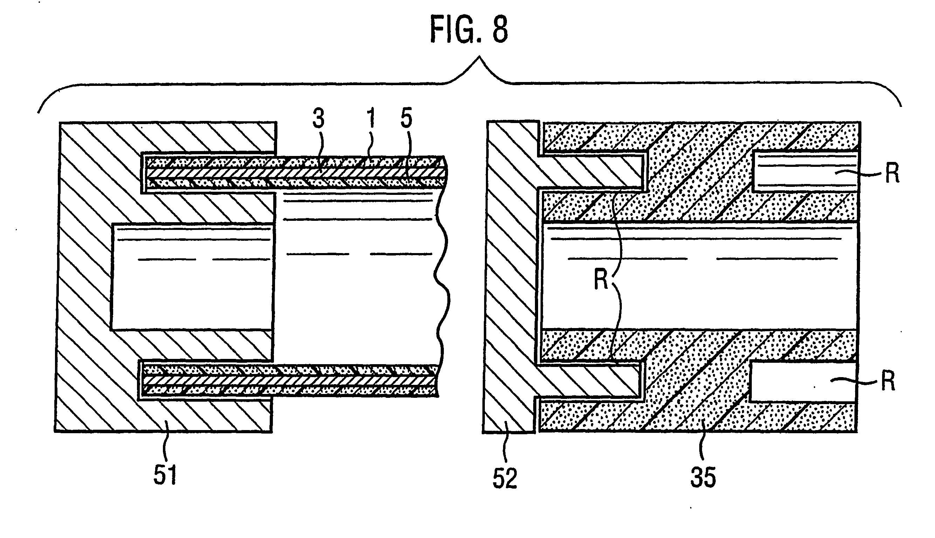

As can be seen from Figure 8, heating tools for use in the socket fusion embodiment are provided in a complementary pair, one (Figure 8a) configured for receiving an end of a pipe and the other (Figure 8b) configured for inserting into the recess of an end of a coupling. The tools typically comprise a metal with a melting point significantly higher than that of the thermoplastic of the pipe or coupling.

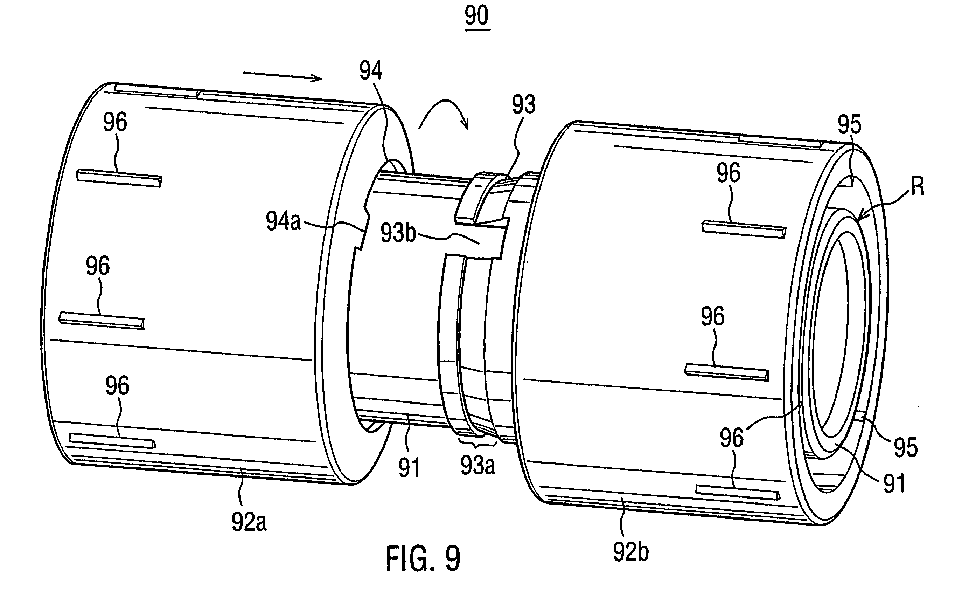

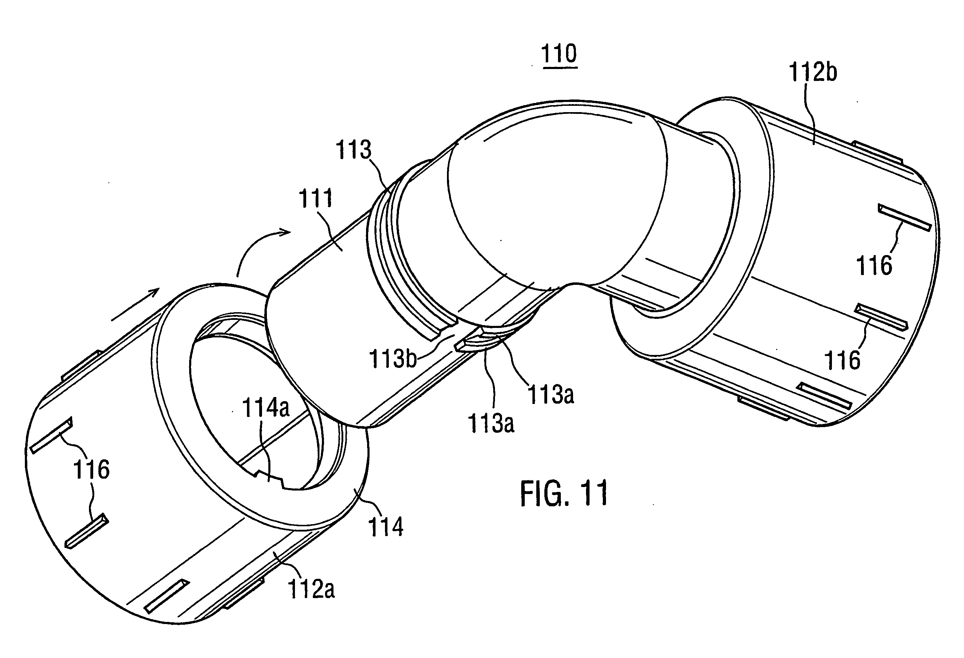

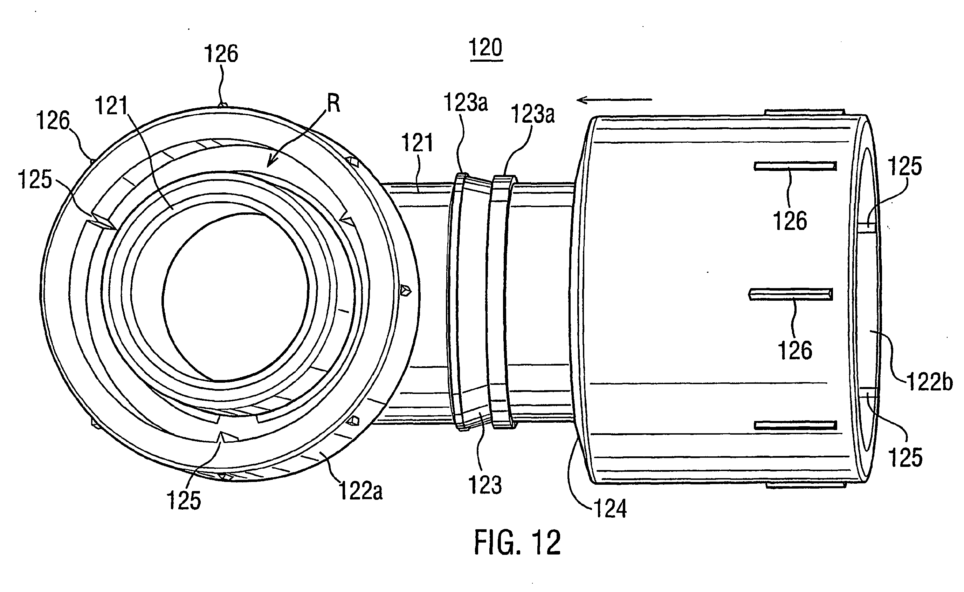

As can be seen from Figures 9, 10, 11 and 12, the couplings are provided from component parts which are secured together to form a coupling having the essential features previously described. The couplings comprise a spigot portion 91, 101, 111, 121 and one or more shroud portions 92a, 92b, 102a, 102b, 112a, 112b, 122a, 122b which are secured over an end of the spigot portion 91, 101, 111, 121 in a concentric manner. The shroud portions 92a, 92b, 102a, 102b, 112a, 112b, 122a, 122b are secured to the spigot portions 91, 101, 111, 121 by means of a groove 93, 113, 123 arranged annularly around a centre portion of the spigot portion 91, 101, 111, 121. The groove is provided in an annular protrusion 93a, 113a, 123a provided on the spigot portion. An annular rim 94, 104, 114, 124 of the shroud portion 92a, 92b, 102a, 102b, 112a, 112b, 122a, 122b is provided with a radially inwardly extending protrusion 94a, 114a, which is received by a correspondingly proportioned recess 93b, 113b, in the annular protrusion 93a, 113a, 123a.

In manufacture, the shroud portion 92a, 92b, 102a, 102b, 112a, 112b, 122a, 122b is slipped over an end of the spigot portion 91, 101, 111, 121 with the protrusion 94a, 104a, 114a, 124a aligned with the recess 93b, 113b, 123b. Once the protrusion 94a, 104a, 114a, 124a is located in the recess 93b, 113b, 123b, the shroud portion can be rotated so that the protrusion 94a, 104a, 114a, 124a engages with the groove 93, 113, 123 in the annular protrusion 93a, 113a, 123a of the spigot portion 91, 101, 111, 121. The annular protrusion 93a, 113a, 123a then serves to prevent longitudinal separation of the spigot and shroud portions.

The arrows in Figures 9, 11 and 12 show the direction in which the shroud portion is moved in order to engage securely with the spigot portion. Arranged on an inner, annular surface of the shroud portion, 92b, 102a, 102b, 112a, 112b, 122a, 122b is a plurality of equally spaced, longitudinally extending fins 95, 105, 115, 125. These fins are used to locate pipe ends received in the recess R of the coupling concentrically.

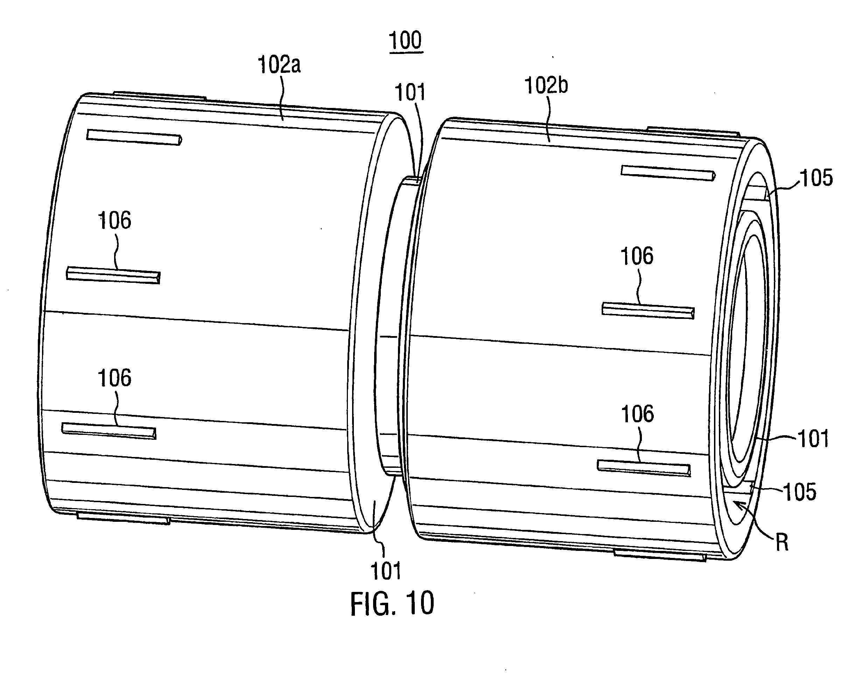

Figures 9, 11 and 12 show the spigot and shroud portions in a non-engaged configuration. Figure 10 shows the spigot and shroud portions in an engaged configuration.

Around the outer annular surface of the shroud portions 92a, 92b, 102a, 102b, 112a, 112b, 122a, 122b there is provided a plurality of annularly spaced markers 96, 106, 116, 126 which can be aligned with corresponding markers on pipe work to be joined by the couplers.

As can be seen the annular groove 93, 113, 123 has a wedge shaped cross section. This permits a little expansion or movement of the shroud portion relative to the spigot portion without leakage from or distortion of the coupling.

## Claims

1. A pipe coupling for joining or capping a multi-layered pipe (37), the pipe coupling (90; 100; 110; 120) having a plastic body and being composed of a spigot portion (91; 101; 111; 121) and one or more shroud portions (92a, 92b; 102a, 102b; 112a, 112b; 122a, 122b) secured to one or more ends of the spigot portion (91; 101; 111; 121) by securing means provided in cooperating annular surfaces of the one or more shroud portions (92a, 92b; 102a, 102b; 112a, 112b; 122a, 122b) and the spigot portion (91; 101; 111; 121), wherein the securing means comprises an annular protrusion (93a; 113a; 123a) provided on an outer annular surface of the spigot portion (91; 101; 111; 121) and having an annular groove (93; 113; 123) therein and an annular rim (94; 114; 124) of the respective shroud portion (92a, 92b; 102a, 102b; 112a, 112b; 122a, 122b) received by the annular groove (93; 113; 123); **characterised in that** the annular protrusion (93a; 113a; 123a) is provided with a recess (93; 113; 123) of corresponding proportions to a protrusion (94a; 114a) provided on the annular rim (94; 114; 124).

2. A pipe coupling as claimed in claim 1, **characterised in that** the pipe coupling is a pipe coupling selected from; a T-junction, an elbow joint, a 45° elbow joint, a cross piece, a Y-piece or an end piece.

3. A pipe coupling as claimed in claim 1 or 2, including a plurality of fins (95; 105; 115; 125) spaced around an inner annular surface of one or more of the one or more shroud portions (92a, 92b; 102a, 102b; 112a, 112b; 122a, 122b).

4. A pipe coupling as claimed in any of claims 1 to 3, **characterised in that** an outer annular surface of the one or more shroud portions (92a, 92b; 102a, 102b; 112a, 112b; 122a, 122b) is provided with a plurality of annularly-spaced markers (96; 106; 116; 126) which can be aligned with corresponding markers on pipe work to be joined by the pipe coupling.

5. A pipe coupling as claimed in any of claims 1 to 4, comprising at least in part one or more plastic materials selected from polyethylene raised temperature ("PE-RT") ethylene/octane copolymers, MDPE, HDPE or PP.

6. A combination of a pipe coupling as claimed in any of claims 1 to 5, and a multi-layered, predominantly plastic pipe (37), the pipe coupling and the pipe (37) being joined by a thermal fusion method.

## Patentansprüche

1. Leitungskupplung zum Verbinden oder Verschliessen einer Mehrschicht-Leitung (37), welche (90, 100, 110, 120) einen Kunststoffkörper aufweist und aus einem Muffenverbindungs-Bereich (91, 101, 111, 121) und ein oder mehreren Kragen-Bereichen (92a, 92b, 102a, 102b, 112a, 112b, 122a, 122b) zusammengesetzt ist, die an ein oder mehreren Enden des Muffenverbindungs-Bereichs (91, 101, 111, 121) mit Mittel befestigt sind, die in zusammenwirkenden ringförmigen Oberflächen der ein oder mehreren Kragen-Bereiche (92a, 92b, 102a, 102b, 112a, 112b) und dem Muffenverbindungs-Bereich (91, 101, 111, 121) bereit gestellt sind, worin das Befestigungsmittel einen ringförmigen Vorsprung (93a, 112a, 123a) aufweist, der an einer äusseren ringförmigen Oberfläche des Muffenverbindungs-Bereich (91, 101, 111, 121) bereit gestellt ist, und eine ringförmige Vertiefung darin (93, 113, 123) aufweist, und worin eine ringförmige Kante (94, 114, 124) des jeweiligen Kranz-Bereichs (92a, 92b, 102a, 102b, 112a, 112b, 122a, 122b) von der ringförmigen Vertiefung (93, 113, 123) aufgenommen wird, **dadurch gekennzeichnet, dass** der ringförmige Vorsprung (93a, 113a, 123a) mit einer Vertiefung (93, 113, 123) ausgestattet ist, die Abmessungen aufweist, die einem auf der ringförmigen Kante (94; 114; 124) bereit gestellten Vorsprung (94a, 114a) entspricht.

2. Leitungskupplung nach Anspruch 1, **dadurch gekennzeichnet, dass** die Leitungskupplung eine Leitungskupplung ist, ausgewählt unter einer T-Verbindung, einem Kniestück, eine 45°-Kniestück, einem Kreuz-Stück, einem Y-Stück oder einem End-Stück.

3. Leitungskupplung nach Anspruch 1 oder 2, welche mehrere Lamellen (95; 105; 115; 125) umfasst, die um eine innere ringförmige Oberfläche von einem oder mehreren der ein oder mehreren Kragen-Bereiche (92a, 92b; 102a, 102b; 112a, 112b; 122a, 122b) im Abstand angeordnet sind.

4. Leitungskupplung nach einem der Ansprüche 1 bis 3, **dadurch gekennzeichnet, dass** eine äussere ringförmige Oberfläche der ein oder mehreren Kragen-Bereiche (92a, 92b; 102a, 102b; 112a, 112b; 122a, 122b) mit mehreren ringförmig beabstandeten Markern (96; 106; 116; 126) bereit gestellt ist, die mit entsprechenden Markern auf der Arbeitsleitung ausgerichtet werden können, um durch die Leitungskupplung verbunden zu werden.

5. Leitungskupplung nach einem der Ansprüche 1 bis 4, welche mindestens teilweise ein oder mehrere Kunststoffmaterialien umfasst, ausgewählt unter Hochttemperatur-Polyethylen ("PE-RT") Ethylen/Oktan-Copolymeren, MDPE, HDPE oder PP.

6. Kombination einer Leitungskupplung nach einem der Ansprüche 1 bis 5 und einer Mehrschicht-Leitung (37) aus hauptsächlich Kunststoff, worin die Leitungskupplung und die Leitung (37) durch ein thermisches Fusionsverfahren verbunden sind.

## Revendications

1. Raccord de tuyau permettant d'assembler ou de coiffer un tuyau multicouche (37), le raccord de tuyau (90 ; 100 ; 110 ; 120) ayant un corps en plastique et étant composé d'une portion de bout mâle (91 ; 101 ; 111 ; 121) et d'une ou plusieurs portions d'enveloppe (92a, 92b ; 102a, 102b ; 112a, 112b ; 122a, 122b) fixées à une ou plusieurs extrémités de la portion de bout mâle (91 ; 101 ; 111 ; 121) par un moyen de fixation disposé dans des surfaces annulaires coopérantes des une ou plusieurs portions d'enveloppe (92a, 92b ; 102a, 102b ; 112a, 112b ; 122a, 122b) et la portion de bout mâle (91 ; 101 ; 111 ; 121), dans lequel le moyen de fixation comprend une protubérance annulaire (93a ; 113a ; 123a) disposée sur une surface annulaire externe de la portion de bout mâle (91 ; 101 ; 111 ; 121) et ayant une gorge annulaire (93 ; 113 ; 123) à l'intérieur et un bord annulaire (94 ; 114 ; 124) de la portion d'enveloppe (92a, 92b ; 102a, 102b ; 112a, 112b ; 122a, 122b) respective reçue par la gorge annulaire (93 ; 113 ; 123) ; **caractérisé en ce que** la protubérance annulaire (93a ; 113a ; 123a) est dotée d'un évidement (93 ; 113 ; 123) de proportions correspondantes à une protubérance (94a ; 114a) disposé sur le bord annulaire (94 ; 114 ; 124).

2. Raccord de tuyaux selon la revendication 1, **caractérisé en ce que** le raccord de tuyaux est un raccord de tuyaux choisi parmi : une jonction en T, un coude, un coude à 45°, une traverse, une pièce en Y ou un embout.

3. Raccord de tuyaux selon la revendication 1 ou 2, comprenant une pluralité d'ailettes (95 ; 105 ; 115 ; 125) espacées autour d'une surface annulaire interne d'une ou plusieurs des une ou plusieurs portions d'enveloppe (92a, 92b ; 102a, 102b ; 112a, 112b ; 122a, 122b).

4. Raccord de tuyaux selon l'une quelconque des revendication 1 à 3, **caractérisé en ce qu'**une surface annulaire externe des une ou plusieurs portions d'enveloppe (92a, 92b ; 102a, 102b ; 112a, 112b ; 122a, 122b) est dotée d'une pluralité de repères espacés annulairement (96 ; 106 ; 116 ; 126) qui peuvent être alignés avec des repères correspondants sur une tuyauterie à assembler par le raccord de tuyaux.

5. Raccord de tuyaux selon l'une quelconque des revendications 1 à 4, comprenant au moins en partie un ou plusieurs matériaux en plastique choisis parmi le poly(éthylène) résistant à une hausse de température (« PE-RT »), les copolymères d'éthylène/octane, le MDPE, le HDPE ou le PP.

6. Combinaison d'un raccord de tuyaux selon l'une quelconque des revendications 1 à 5, et d'un tuyau multicouche principalement en plastique (37), le raccord de tuyaux et le tuyau (37) étant assemblés au moyen d'un procédé de fusion thermique.
